# EUROPÄISCHE PATENTANMELDUNG

(11) **EP 2 402 137 A2**
(43) Veröffentlichungstag der Anmeldung: **04.01.2012**
(21) Anmeldenummer: 11158529.5
(22) Anmeldetag: 16.03.2011
(51) Int. Cl.: B29C 44/34

(54) **Schwenkbarer Vorschäumbehälter**

(30) Priorität: 08.06.2010 DE 202010007736 U
(71) Anmelder: Kurtz GmbH, 97892 Kreuzwertheim (DE)
(72) Erfinder: Kurtz, Walter, 97907, Hasloch/Main (DE)
(74) Vertreter: Böck, Bernhard

(57) **Zusammenfassung**

Die Erfindung betrifft eine Vorrichtung (1) zum Vorschäumen von Partikeln aus treibmittelhaltigem Kunststoff mit einem ein Rührwerk aufweisenden Vorschäumbehälter (2), der eine mit einer Schließvorrichtung (6) verschließbare Öffnung (5) aufweist, die zum Befüllen und zur Entlüftung des Vorschäumbehälters dient, wobei der Vorschäumbehälter (2) derart schwenkbar ist, dass beim Verschwenken die Öffnung aus einer oberen Stellung zum Befüllen des Vorschäumbehälters in eine untere Stellung zum Entleeren des Vorschäumbehälters gelangt, wobei die Öffnung (5) in der unteren Stellung zur Ausgabe des vorgeschäumten Materials dient.

## Beschreibung

Die Erfindung betrifft einen Vorschäumbehälter zum Vorschäumen von Partikeln aus treibmittelhaltigen Kunststoffen nach dem Oberbegriff des Anspruchs 1.

Es sind verschiedene Verfahren und Vorrichtungen zum Vorschäumen aus dem Stand der Technik bekannt, wobei in der Regel dies mittels einer kontinuierlichen Arbeitsweise durchgeführt wird. Zum Zweck des Vorschäumens wird in ein Behältnis kontinuierlich Ausgangsmaterial zugeführt. Im Behältnis erfolgt das Aufschäumen des Materials, wobei hierzu vielfach heißer Wasserdampf von unten zugesetzt wird. Um ein optimales Durchmischungsverhältnis zu erzielen ist des weitern in aller Regel ein Rührwerk am bzw. im Behältnis angebracht. Nach der erforderlichen Verweilzeit verlässt das aufgeschäumte Material den Vorschäumbehälter und kann weiterverarbeitet werden. Ein Beispiel für eine derartige Vorrichtung und für ein derartiges Verfahren zeigt die Patentschrift DE 23 20 904 B2. Hierbei erfolgt die Einbringung des aufzuschäumenden Materials von der Unterseite und die Austragung des aufgeschäumten Materials aus einer Öffnung in der Oberseite. Im Inneren sind die im Vorschäumbehälter üblichen Rührer angeordnet. Diese werden von einem oberseitigen Antrieb angetrieben. Besondere Aufgabe der im angeführten Dokument beschriebenen Erfindung ist es, unterschiedliche Rührgeschwindigkeiten im unteren und oberen Bereich zu ermöglichen. Dies ist insbesondere daher erforderlich, da das neu eingebrachte Material eine abweichende Viskosität bzw. Dichte wie das aufgeschäumte Material aufweist und darüber hinaus eine stärkere Durchrührung erfordert.

Ein Vorschäumbehälter dient zum Aufschäumen von treibmittelhaltigen Kunststoffen, insbesondere Polystyrol. Derartig aufgeschäumtes Polystyrol wird als expandiertes Polystyrol vielfach insbesondere zu Dämmzwecken eingesetzt und ist landläufig unter dem Handelsnamen Styropor (BASF) bekannt. Zur Herstellung wird in aller Regel das physikalische Schäumen eingesetzt. Hierbei wird ein treibmittelhaltiges Granulat mit zumeist 5% - 7% Pentan durch Erhitzen mit Wasserdampf, wobei der Wasserdampf in aller Regel über 100° C aufweist, auf das circa 40-fache Volumen des Ausgangsmaterials vorgeschäumt. Nach dem Vorschäumen ist es in aller Regel erforderlich das vorgeschäumte Material zunächst zwischenzulagern, bevor es zur endgültigen Form weiterverarbeitet werden kann. Die Dichte des expandierten Polystyrols wird durch den Vorschäumgrad bestimmt. Je länger und je intensiver die Vorschäumung ausfällt, umso geringer fällt die Dichte des späteren Fertigteils aus.

Da das Ergebnis des Vorschäumens bzw. der Qualität des vorgeschäumten Materials maßgeblich durch die Vorschäumparameter bestimmt werden, ist es insbesondere wichtig, diese möglichst exakt einzuhalten. Hierbei sind zum einen die Rührgeschwindigkeit, die Verweilzeit und die Temperatur und Menge des eingebrachten Dampfes sowie die Menge und Art des eingebrachten Materials zu nennen. Aufgrund der in aller Regel angewendeten kontinuierlichen Arbeitsweise ist es insbesondere nicht möglich, gleichmäßige Qualitätseigenschaften für das gesamte Materialvolumen zu gewährleisten. Vielmehr führt in aller Regel die kontinuierliche Arbeitsweise zu einer unterschiedlichen Verweilzeit und unterschiedlichen Durchmischung des aufzuschäumenden Materials. Sofern die daraus resultierenden Qualitätsnachteile vernachlässigbar sind, stellt das kontinuierliche Herstellungsverfahren eine sehr kostengünstige Lösung dar.

Eine Alternative zum kontinuierlichen Arbeitsverfahren zeigt die Schrift DE 1 166 459 B. Hierbei wird das Material in einer diskontinuierlichen Arbeitsweise vorgeschäumt. Zu diesem Zweck wird in einem Vorschäumbehälter das vorzuschäumende Ausgangsmaterial über einen Trichter eingefüllt. Unter stetem Rühren wird unter Zugabe von Wasserdampf das Vorschäumen ermöglicht. Die Einbringung des Wasserdampfs erfolgt vorzugsweise von der Unterseite des Vorschäumbehälters, wobei zu diesem Zweck im Behälter abgesetzt vom Boden des Behälters ein Zwischenboden eingezogen ist, der die Dampfzufuhr vom aufzuschäumenden Kunststoffvolumen trennt. Dieser Zwischenboden ist für den Wasserdampf durchlässig, jedoch für das aufzuschäumende Kunststoffmaterial undurchlässig. Dies wird in einfacher Weise erreicht durch die vorteilhafte Wahl der Spaltenweiten bzw. Öffnungsgrößen im Zwischenboden.

Mittels des Einbringens von Wasserdampf wird zum einen das Aufblähen des vorzuschäumenden Ausgangsmaterials ausgelöst als auch zugleich ein Austrag der im Vorschäumbehälter enthaltenen Luft bewirkt. Nach einiger Prozesszeit kann in aller Regel davon ausgegangen werden, dass das gesamte zuvor enthaltene Luftvolumen vom Wasserdampf verdrängt wurde. Bis zu diesem Zeitpunkt ist es zwingend erforderlich, eine große Entlüftungsöffnung vorzusehen. Zu diesem Zweck kann unter anderem auch die Einfüllöffnung verwendet werden. Da das aufzuschäumende Ausgangsmaterial ein vielfach geringeres Volumen besitzt als das aufgeschäumte Produkt, ist es naheliegender Weise erforderlich, die Auslassöffnung deutlich größer vorzusehen als die Einlassöffnung. Aufgrund der geringeren Querschnittsfläche der Einfüllöffnung ist es für die optimale Entlüftung des Vorschäumbehälters folglich im Stand der Technik notwendig, ergänzend Entlüftungsöffnungen in der Oberseite vorzusehen. Bei der diskontinuierlichen Arbeitsweise wird für den Prozess des Vorschäumens die Auslassöffnung geschlossen und wiederum zum Austrag des aufgeschäumten Materials geöffnet. Insofern kann zur Erzielung der optimalen Materialqualität der Dampfeintrag, die Temperatur sowie die Rührgeschwindigkeit individuell zeitabhängig gesteuert werden. Folglich ist mit der diskontinuierlichen Arbeitsweise eine höhere Qualität verbunden als mit einer kontinuierlichen Arbeitsweise.

Wie zuvor ausgeführt und in der Gegenüberstellung von kontinuierlicher und diskontinuierlicher Arbeitsweise dargestellt, weist Letztere einen deutlichen Qualitätsvorteil auf. Jedoch ist diese Arbeitsweise mit deutlich höheren Kosten verbunden, als dass es zum einen bei diskontinuierlicher Arbeitsweise eines erhöhten Handlings und Herstellungsaufwands bedarf und insbesondere die Produktionszeit zur Herstellung des gleichen vorgeschäumten Materialvolumens größer ausfällt.

Nachteilig ist bei der dargestellten Ausführungsform insbesondere die komplette Entleerung des Vorschäumbehälters. Hierbei ist es erforderlich, mittels des Rührers den kompletten Austrag des Inhalts sicherzustellen, wobei keine Reste am Boden verbleiben dürfen. Es ist insofern offensichtlich, dass die Zeit bis zum weitgehenden Austrag zwar sehr schnell vonstatten gehen mag, jedoch bis zum vollständigen Austrag eine erhöhte Dauer benötigt wird.

Dennoch sind letzte Restlagerungen am Boden unterhalb des Rührers nicht zu vermeiden. Gleichfalls ist offensichtlich, dass der Auslass im Behälter zwangsläufig zu Restanhaftungen neigt und insbesondere im Spalt zwischen Verschluss und Behälterwandung Restpartikel nach Verschließen des Auslasses verbleiben können. Im nachfolgenden Schäumvorgang führt dies vielfach zu geringfügigen aber unerwünschten Verunreinigungen des neu aufzuschäumenden Materials. Da jedoch die diskontinuierliche Arbeitsweise insbesondere zur Erzielung einer hohen Produktqualität eingesetzt wird, ist dies von besonderem Nachteil. Aufgabe der vorliegenden Erfindung ist es daher, einen Vorschäumbehälter vorzustellen, mit dem es möglich ist, kostengünstig vorgeschäumtes Material in höchster Qualität herstellen zu können.

Diese Aufgabe wird durch die erfindungsgemäße Vorrichtung gemäß Anspruch 1 gelöst.

Vorteilhafte Ausführungsformen sind Gegenstand der Unteransprüche.

Eine Vorrichtung zum Vorschäumen von Partikeln aus treibmittelhaltigem Kunststoff besitzt als zentrales Element den Vorschäumbehälter. Dieser ist mit einem Rührwerk ausgerüstet, mit welchem es ermöglicht ist, den Inhalt in Bewegung zu halten. Des Weiteren weist der Vorschäumbehälter eine mit einer Schließvorrichtung verschließbare Öffnung auf. Mittels dieser Öffnung ist ein Befüllen des Vorschäumbehälters mit dem aufzuschäumenden Ausgangsmaterial ermöglicht. Zugleich dient die Öffnung zur Entlüftung des Vorschäumbehälters. Wenngleich gattungsgemäße Vorrichtung zunächst einmal unabhängig von diskontinuierlicher oder kontinuierlicher Arbeitsweise gekennzeichnet ist, ist dennoch im Wesentlichen die diskontinuierliche Arbeitsweise inbegriffen. Insofern ist es mit derartiger Vorrichtung wie im Stand der Technik möglich, entsprechende Materialien vorzuschäumen.

Charakteristisches Merkmal der erfindungsgemäßen Lösung ist die Möglichkeit, den Vorschäumbehälter von einer oberen Stellung zum Befüllen in eine untere Stellung zum Entleeren zu schwenken. Hierbei wird die vorhandene Öffnung, welche in der oberen Stellung zum Befüllen des Vorschäumbehälters genutzt werden kann, in der unteren Stellung zur Ausgabe des vorgeschäumten Materials eingesetzt.

Durch die erfindungsgemäße Lösung werden die relevanten Nachteile der aus dem Stand der Technik bekannten Vorschäumbehälter mit diskontinuierlicher Arbeitsweise überwunden. Zugleich reduziert sich der Kostenaufwand zur Herstellung der gesamten Vorschäum-Anlagentechnik mit Berücksichtigung der Verbindung des Vorschäumbehälters mit Materialzuführung und Materialableitung sowie den Versorgungseinrichtungen. Durch die neu geschaffene Lösung, den Vorschäumbehälter zu schwenken, wird es erstmalig ermöglicht, auf die ansonsten erforderliche separate Auslassöffnung zu verzichten. Insofern ist ein Anhaften von Restmaterial im Spalt zwischen Verschluss der Auslassöffnung und dem eigentlichen Behälter ausgeschlossen.

Zugleich entfällt die Notwendigkeit, am Behälter eine druckdichte Auslassöffnung vorzusehen. Durch die Verwendung der Einlassöffnung als zugleich Auslassöffnung wird zugleich die Entlüftung in vorteilhafter Weise verbessert. Da die Auslassöffnung ohnehin einen größeren Querschnitt erfordert, wird durch Wahl dieses vergrößerten Querschnitts die notwendige Querschnittsfläche zur Entlüftung des Vorschäumbehälters geschaffen, ohne dass es einer zusätzlichen Entlüftung bedarf.

Wenngleich im Stand der Technik die Verwendung der Schließvorrichtung an der einzigen Öffnung wie der Auslassöffnung bekannt ist, erreicht man in dieser erfindungsgemäßen Ausführung einen weiteren Kostenvorteil. Insbesondere kann ein ebener Verschluss für die Öffnung verwendet werden anstelle eines passend zum zylindrischen Behälter gewölbten Verschlusses. Weiterhin vereinfacht die erfinderische Ausführungsart einen Abschluss des Behälterinhaltes, als dass nur eine Öffnung verschlossen werden muss, während hingegen im Stand der Technik mehrere Öffnungen, wie in der Regel an der Auslass- und der Einlassöffnung sowie den Entlüftungsöffnungen, zu verschließen wären.

Hierbei umfasst die Schließvorrichtung zumindest einen Verschluss, welcher die Öffnung vollständig überdeckt. Prinzipiell wäre es möglich, den Verschluss von Hand auf den Deckel zu schrauben und somit die Öffnung zu verschließen oder den Verschluss lose aufzulegen oder an ein Gelenk klappbar anzubinden. Insofern bedarf es für die Schließvorrichtung keiner weiteren Mittel, als den Verschluss selber.

In Fortführung verbessert sich ebenso der Austrag des aufgeschäumten Materials aus dem Vorschäumbehälter. Durch das Schwenken des Behälters ist es insofern möglich, diesen schräg anzustellen und somit gibt es keine waagrechten Flächen im Behälter und somit auch keine Möglichkeiten zur Restablagerung des aufgeschäumten Materials im Behälter. Demzufolge kann die Qualität bei gleichzeitig verringerter Prozessdauer weiter verbessert werden, da das im Behälter verbleibende Materialvolumen trotz kurzer Austragszeit vernachlässigbar gering gehalten werden kann.

Naheliegenderweise ist der Vorschäumbehälter vorteilhafterweise um eine Schwenkachse schwenkbar, wobei die Schwenkachse im Wesentlichen waagrecht angeordnet ist. Hierbei ist die Schwenkachse senkrecht zu einer Mittelachse des Vorschäumbehälters angeordnet, wobei insbesondere die Mittelachse zugleich Achse des Rührwerks ist.

Wenngleich es denkbar wäre, bei Einsatz eines konischen waagrecht liegenden Vorschäumbehälters die Öffnung seitlich vorzusehen und somit durch das Drehen des Vorschäumbehälters die Verbringung von einer oberen in eine untere Stellung zu realisieren, ist jedoch in aller Regel davon auszugehen, dass es vorteilhaft und sinnvoll ist, den Vorschäumbehälter im Wesentlichen stehend anzuordnen. Es erfolgt das Schwenken des Vorschäumbehälters um eine Schwenkachse, welche somit senkrecht zur Mittelachse des Vorschäumbehälters verläuft. Es wird zum Austrag des aufgeschäumten Materials der Vorschäumbehälter von der stehenden Position um einen Winkel von 100 bis 170° geschwenkt.

Um eine optimale Durchmischung des gesamten Behälterinhalts zu gewährleisten, ist es vorteilhaft, wenn die Achse des Rührwerks zugleich Mittelachse des Behälters ist. Insofern ist es möglich, die Rührer des Rührwerks im Inneren des Behältnisses bis an die Wandung des zylinderförmigen Behältnisses zu führen.

Um den Vorschäumbehälter in einfacher Weise schwenken zu können, ist diesem ein Behälterschwenkantrieb zugeordnet. Mit diesem wird es ermöglicht, mittels einer Steuerung den Vorschäumbehälter um die Schwenkachse zu schwenken. Folglich erübrigt sich eine manuelle Betätigung zur Schwenkung des Vorschäumbehälters. Hierbei ist es insbesondere vorteilhaft, wenn die Schwenk-Geschwindigkeit und der Schwenkwinkel, um den der Vorschäumbehälter geschwenkt wird, variabel einstellbar sind.

Die Steuerung der Schwenk-Geschwindigkeit und des Schwenkwinkels ist insbesondere beim Ende des Vorschäumprozesses mit dem nachfolgenden Austrag vorteilhaft. Hierbei kann eine bei vollem Behälterstand zunächst langsame Schwenkbewegung und bei sich zunehmend leerenden Vorschäumbehälter schnellere Schwenkbewegung die Entleerung vorteilhaft beeinflussen. Dies kann leicht nachvollzogen werden bei Betrachtung der Entleerung einer großhalsigen Flasche mit leicht zähflüssigem Inhalt. Ebenso wird es durch die Steuerung ermöglicht, Zwischenhalte einzulegen.

Aufgrund des Vorhandenseins der Schwenkmöglichkeit des Vorschäumbehälters eröffnet dies eine weitere Möglichkeit zur Optimierung des Vorschäumprozesses. Hierbei ist es besonders vorteilhaft zur Verbesserung der Durchrührung des aufzuschäumenden Materials den Behälter während des Prozesses zumindest zeitweilig leicht schräg zu stellen, und somit die Schwereverhältnisse des Materials im Behältnis zu verändern und somit das Rührergebnis zu beeinflussen.

Wie zuvor ausgeführt, besitzt der Vorschäumbehälter ein Rührwerk, welches vorzugsweise mittig zum Vorschäumbehälter angeordnet ist. Aufgrund der Schwenkbewegung des Vorschäumbehälters wird in einer besonders vorteilhaften Ausführungsform das Rührwerk mittelbar oder unmittelbar am Vorschäumbehälter angeordnet und beim Schwenken des Vorschäumbehälters mitgeschwenkt. Diese Ausführungsform erübrigt insbesondere ein Abnehmen des Rührwerks bzw. eines Rührwerkantriebs, um den Behälter schwenken zu können. Folglich wird keine unnötige Prozesszeit verloren zur Trennung des Vorschäumbehälters vom Rührwerk bzw. Antrieb des Rührwerks. Hierbei umfasst das Rührwerk zum einen den Rührer, welcher sich im Vorschäumbehälter befindet und für die Durchmischung des Materials verantwortlich ist, und zum anderen den diesen Rührer antreibenden Antrieb.

Da sich der Antrieb des Rührwerks in aller Regel auf der Oberseite befindet, wird das Rührwerk in vorteilhafterweise an einem oberen Deckel des Vorschäumbehälters angeordnet. Insofern kann bei Montage bzw. Demontage des Vorschäumbehälters das Rührwerk mit Lösen des Deckels entnommen werden.

Je nach Aufbau der gesamten Anlagentechnik kann es gleichfalls alternativ besonders vorteilhaft sein, wenn der Antrieb des Rührwerks am unteren Boden des Vorschäumbehälters angebracht ist. Nachteilig ist zwar, dass die Antriebswelle zwischen Antrieb des Rührwerks und dem Rührer zumindest gegenüber dem aufzuschäumenden Material abzudichten ist, jedoch wird durch diese Anordnung der Schwerpunkt des gesamten Vorschäumbehälters positiv beeinflusst. Hierbei kann zur leichteren Wartung ebenfalls der Boden von der vorwiegend zylindrischen Behälterwandung trennbar sein, um eine leichte Wartung und Reinigung zu erreichen.

Wenngleich die Schließvorrichtung primär dem räumlichen Abschluss von dem Behälterinneren gegenüber der Umgebung dient und somit ein loser Verschluss ausreichend wäre, ist der Prozess nur zweckmäßig durchführbar, wenn der Verschluss zum einen die Öffnung fest verschließen kann und zum anderen dieses ohne großen manuellen Aufwand erfolgen kann. In naheliegender Weise soll der Verschluss beim Schwenkvorgang einen ungewollten Austritt des aufgeschäumten Materials verhindern. Insofern bedarf es vorteilhafter Weise eines Schließantriebes im Umfang der Schließvorrichtung. Diese kann somit angesteuert werden und folglich ist eine Betätigung der Schließvorrichtung möglich, ohne dass der Verschluss von Hand verriegelt oder sonst wie befestigt werden muss.

Weiterhin ist es vorteilhaft, wenn der Verschluss für den Prozessvorgang selbst zur Erhöhung des Prozessdrucks im Behältnis verwendet wird. Hierdurch ermöglicht die Schließvorrichtung unter anderem die Optimierung des Herstellungsprozesses. Hierbei ist es möglich, nach Austragen der im Behälter zuvor enthaltenen Luft durch Verschließen der Öffnung einen höheren Druck im Behälter aufzubauen. Dieser erhöhte Druck verbessert die Reaktionsfähigkeit und beschleunigt den Vorschäumprozess.

Aufgrund dieser Notwendigkeit, die Öffnung bei jedem Prozess sicher verschließen zu können, ist es besonders vorteilhaft, wenn diese Öffnung mit einem steuerbaren Schließantrieb geschlossen werden kann. Hierbei ist es weiterhin vorteilhaft, wenn mittels des Schließantriebs der Schließvorrichtung die Öffnung druckdicht verschlossen werden kann. Insofern wird es ermöglicht, einen höheren Prozessdruck im Behälter zu fahren und hierbei eine Beschleunigung des Vorschäumvorgangs zu ermöglichen.

In Fortführung ist es vorteilhaft, wenn die Schließvorrichtung des Weiteren den Druck im Vorschäumbehälter beeinflussen kann. Wahlweise kann dies geschehen, indem die Dichtheit der Öffnung direkt vom Druck im Behälter abhängig ist, welcher auf die Schließvorrichtung wirkt. Hierbei kann die Schließvorrichtung in Art eines Überdruckventils wirken. Alternativ ist es aber ebenso möglich, den Druck über eine aktive Steuerung der Schließvorrichtung zu beeinflussen. Hierbei kann der von einem Drucksensor aufgenommene Wert zu einer Regelung eines über die Prozesszeit fixen oder variablen Druck-Sollwerts führen, der die Schließvorrichtung wertabhängig öffnet und schließt bzw. die Schließkraft verringert oder erhöht.

Vorteilhafterweise wird der Vorschäumbehälter mit einer Heißdampfzufuhr versehen. Zu diesem Zweck weist der Vorschäumbehälter einen Innenboden auf, welcher im Abstand zum äußeren Boden des Vorschäumbehälters angeordnet ist. In den Raum, gebildet durch Innenboden und äußeren Boden des Vorschäumbehälters, wird entsprechend Heißdampf zugeführt. Durch eine Vielzahl von Spalten und/oder Löchern mit geringem Querschnitt bzw. geringer Weite im Innenboden wird es ermöglicht, dass dieser Heißdampf in das aufzuschäumende Material eindringen kann. Entsprechend der vorteilhaften Ausführung der Spaltweite bzw. Größe der Löcher ist es ausgeschlossen, dass das aufzuschäumende Kunststoffmaterial in diese eindringen kann. Insofern ist der Innenboden dampfdurchlässig, jedoch für den aufzuschäumenden Kunststoff im Wesentlichen undurchlässig.

Die Zuführung von Heißdampf ist besonders vorteilhaft, da kostengünstig und mit einfacher sowie sicherer Prozesstechnik der Prozess des Aufblähens ausgelöst wird. Der Heißdampf hat hierbei die beiden Aufgaben, die vorhandene Luft aus dem Vorschäumbehälter auszutragen und den Aufquellvorgang des treibmittelhaltigen Kunststoffausgangsmaterials auszulösen. Dieser Quellvorgang wird vor allem durch die erhöhte Temperatur ausgelöst.

Die Zufuhr des Heißdampfes zum Vorschäumbehälter kann in unterschiedlicher Weise erfolgen. So ist es zum einen möglich, eine fest verlegte Leitung zum Behälter, diese weiter rotierbar über die Schwenkachse und im Folgenden entlang des Behälters zum Boden des Behälters zu führen. Dies erfordert jedoch ein drehdichtes Gelenk in der Dampfleitung auf der Schwenkachse. Insofern erhöht dies den konstruktiven Aufwand für die Schwenkachse. Denkbar wäre ebenso die Zuführung des Heißdampfes über flexible Dampfdruckleitungen, welche beim Schwenkvorgang entsprechende Flexibilität aufweisen und die Schwenkbewegung des Vorschäumbehälters gestatten. Aufgrund des großen Schwenkwegs ist dies jedoch wiederum mit Nachteilen verbunden und erfordert eine teuere Lösung für die flexible Heißdampfführung.

Daher wird in vorteilhafterweise die Zufuhr von Heißdampf über eine lösbare Kupplung realisiert, wobei eine Kupplungsseite fest mit dem Behälterboden in Verbindung steht, und die zweite Kupplungsseite am tragenden Gestell angebracht ist und in Verbindung mit der Dampfversorgung steht. Insofern wird bei Grundstellung, d.h. aufrechter Stellung des Vorschäumbehälters zum Vorschäumprozess, die Dampfzufuhr ermöglicht. Diese ist bekanntlich beim Austrag des aufgeschäumten Materials entbehrlich und insofern ist es problemlos, wenn diese Dampfzufuhr zum Entleeren des Behältnisses geöffnet wird. Vorteilhafterweise wird auf der Seite der Dampfversorgung ein Ventil angeordnet, welches ein ungewolltes Entweichen des heißen Dampfs bei Öffnen der Kupplung verhindert.

Alternativ ist aber auch eine Kombination von fest verlegter Dampfzuführung und einer Kupplungsanbindung möglich. Dieses ist besonders in dem Falle vorteilhaft, wenn der Behälter in geringer Schrägstellung mit Dampf versorgt werden soll, dieses jedoch bei weiterem Schwenken nicht mehr erforderlich ist. Vorteilhaft ist hierbei eine über einen geringen Weg mitschwenkende Kupplung auf der Gestellseite. Dieses kann leicht dahingehend realisiert werden, indem die Kupplungsseite beispielsweise federbelastet beweglich gelagert ist. Die Dampfzufuhr zwischen dem Gestell und der Kupplung auf der Gestellseite erfordert insofern einen kurzen flexiblen Leitungsabschnitt. Diese Ausführungsform, für die der Fachmann ohne weiteres geeignete Lösungen findet, führt bei einem kleinen Schwenkwinkel des Vorschäumbehälters aus der Senkrechten zu einem Mitbewegen der gestellseitigen Kupplung. Wenn das Ende des Bewegungsraums der Kupplung erreicht ist, führt ein weiteres Schwenken des Vorschäumbehälters zu einem Lösen der Kupplung. Da ein Öffnen und Schließen einer Kupplung in aller Regel eine erhöhte Kraft erfordert, wird beim Zurückschwenken des Vorschäumbehälters die Kupplung nicht schon beim Kontakt schließen, sondern vielmehr erst bei Erreichen der senkrechten Stellung.

Entsprechend der Notwendigkeit zum Prozess des Vorschäumens zunächst Ausgangsmaterial dem Vorschäumbehälter zuzuführen, ist der Vorrichtung eine Einfüllvorrichtung angeordnet. Insofern kann über diese Einfüllvorrichtung das aufzuschäumende Ausgangsmaterial mittels eines Dosierbehälters über einen Einfüllstutzen dem Vorschäumbehälter zugeführt werden. Hierbei wird der Einfüllstutzen bewegbar oberhalb der Einfüllöffnung angeordnet. In besonderer Ausgestaltung wird der Einfüllstutzen schwenkbar ausgeführt und erfordert insofern einen geringen technischen Aufwand zur Realisierung der Bewegung des Einfüllstutzens zur Öffnung hin und von der Öffnung des Vorschäumbehälters weg.

Entsprechend der Notwendigkeit in aller Regel eine Zwischenlagerung des aufgeschäumten Materials vor der endgültigen Verarbeitung in die spätere Form durchzuführen, wird der Vorrichtung vorteilhafterweise eine Auffangvorrichtung, insbesondere ein Fließbett, zugeordnet. Insofern ist es ermöglicht, über die Öffnung am Vorschäumbehälter zum Austrag das Material in entsprechende Auffangvorrichtung bzw. Fliesbett zu überführen.

Wenngleich die Komplexität der notwendigen Schalt- bzw. Regelvorgänge überschaubar ist, ist es dennoch besonders vorteilhaft, wenn der Vorrichtung eine Steuereinrichtung zugeordnet ist. Insofern kann mit dieser Steuerungseinrichtung das Öffnen und Schließen der Öffnung, das Schwenken des Einfüllstutzens, das Einfüllen des Ausgangsmaterials, der Antrieb des Rührwerks und/oder das Schwenken des Vorschäumbehälters gesteuert oder geregelt werden. Durch diese vorteilhafte Ausführung kann ein automatischer Vorschäumprozess gefahren werden. Insofern kann die Qualität des aufzuschäumenden Materials in optimaler Weise eingestellt und sichergestellt werden.

Hieraus ergibt sich ein besonders vorteilhaftes Verfahren zum Vorschäumen von Partikeln aus treibmittelhaltigen Kunststoffen. Dies umfasst die Verfahrensschritte:
- Öffnen einer Öffnung an einem Vorschäumbehälter;
- Bewegen eines Einfüllstutzens über die Öffnung;
- Einfüllen von treibmittelhaltigem Kunststoff in den Vorschäumbehälter;
- Zurückschwenken des Einfüllstutzens;
- Einleitung von Heißdampf von der Unterseite in den Vorschäumbehälter und Austreibung von Luft aus dem Vorschäumbehälter;
- Zugleich mit vorhergehendem Schritt Vorschäumen des Materials unter gleichzeitigem Rühren mittels eines Rührwerks;
- Schließen der Einfüllöffnung;
- Fortsetzung der Einleitung von Dampf und dem Vorschäumen des Materials unter gleichzeitigem Rühren, wobei der Druck und die Temperatur im Vorschäumbehälter gegenüber dem Zustand mit geöffneter Öffnung erhöht sind;
- Schwenken des Vorschäumbehälters in eine Lage, bei der sich die Öffnung auf der unteren Seite befindet;
- Öffnen der Öffnung und Entleerung des Vorschäumbehälters.

Durch dieses neu geschaffene Verfahren zur Herstellung von vorgeschäumtem Material, insbesondere expandiertem Polystyrol, kann eine besonders hohe Produktqualität erzielt werden. Zugleich halten sich die Kosten im Rahmen und können auf einem Niveau gehalten werden, welche von anderen diskontinuierlichen Arbeitsweisen bekannt sind. Insofern zeigt sich ein deutlicher Vorteil gegenüber den bekannten Vorschäumbehältern bzw. bekannten Herstellungsverfahren und ermöglicht Qualitäten, welche bisher nur schwer erreichbar waren. Vorteilhafterweise wird bei einem derartigen Verfahren eine Vorrichtung gemäß einer der vorgestellten Ausführungsformen verwendet.

Die nachfolgenden Figuren skizzieren eine beispielhafte Ausführungsform einer erfindungsgemäßen Vorrichtung.

Es zeigen:
- Fig. 1: eine beispielhafte Vorrichtung mit Vorschäumbehälter und Einfüllvorrichtung;
- Fig. 2: eine detaillierte Ansicht der Einfüllöffnung am Vorschäumbehälter;
- Fig. 3: eine rückwärtige Ansicht der Vorrichtung aus Fig. 1,
- Fig. 4: eine rückwärtige Ansicht der Vorrichtung aus Fig. 1 mit geschwenktem Vorschäumbehälter.

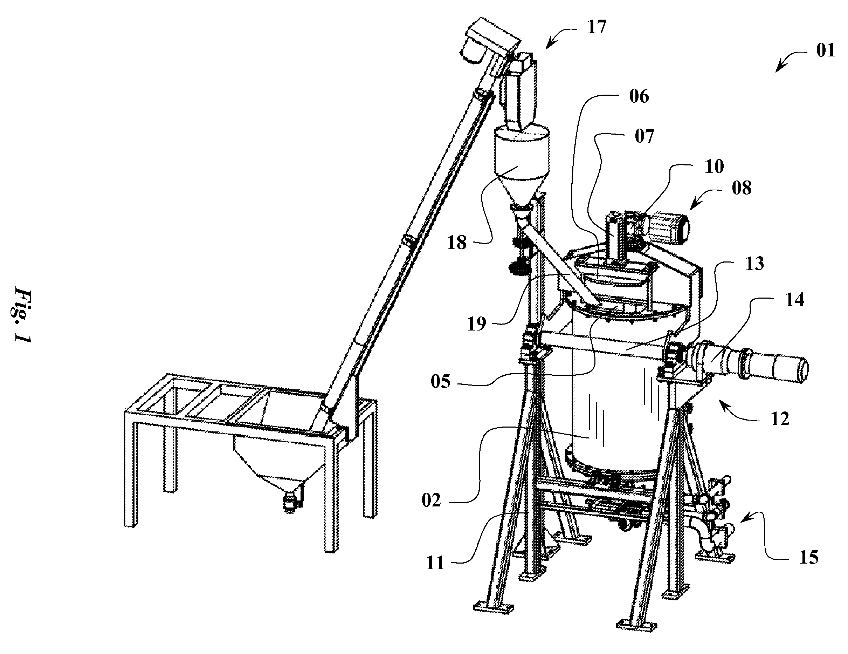

Die **Figur 1** zeigt beispielhaft eine Lösung für eine erfindungsgemäße Vorrichtung 01 zum Vorschäumen von Partikeln aus treibmittelhaltigen Kunststoffen. Wesentlicher Bestandteil der Vorrichtung 01 ist der Vorschäumbehälter 02. Relevanter Bestandteil für die erfindungsgemäße Ausführung ist die Öffnung 05 auf der Oberseite des Vorschäumbehälters 02. Dieser Öffnung zugeordnet ist ein Verschluss 06, mit dem es ermöglicht ist, die Öffnung 05 im Wesentlichen druckdicht zu verschließen. Um die automatische Steuerung der Vorrichtung 01 zu ermöglichen, ist ein steuerbarer Antrieb 07 zur Bewegung des Verschlusses 06 angeordnet. Weiterhin maßgebliches Element der Vorrichtung 01 ist das Rührwerk 08 am Vorschäumbehälter 02. Dieses Rührwerk besteht zum einen aus dem Rührer 09 (nicht dargestellt), welcher sich im Inneren des Vorschäumbehälters 02 befindet. Dieser Rührer 09 wird vom Antrieb 10 des Rührwerks 08 angetrieben. Hierbei befindet sich der Antrieb 10 oberhalb des Vorschäumbehälters 02. Der Vorschäumbehälter 02 ist mit Schließvorrichtung 06+07 und Rührwerk 08 schwenkbar an einem Gestell 11 gelagert. Die Schwenkeinrichtung 12, mittels derer der Vorschäumbehälter 02 zusammen mit Schließvorrichtung und Rührwerk 08 geschwenkt werden kann, besteht aus der Schwenkachse 13 und dem Schwenkantrieb 14. Hierbei ermöglicht wiederum der steuerbare Schwenkantrieb 14 eine automatische Prozessführung und Schwenken des Vorschäumbehälters 02. Entsprechend der vorteilhaften Ausführung mit Einbringung von Heißdampf in den Bodenbereich des Vorschäumbehälters 02 wird unterhalb des Vorschäumbehälters die Dampfzuführung 15 angeordnet.

Das aufzuschäumende Material wird der Vorrichtung 01 mittels der Einfüllvorrichtung 17 zugeführt. Diese linkerhand dargestellte Einfüllvorrichtung 17 umfasst unter anderem einen Dosierbehälter 18 sowie den Einlassstutzen 19. Mittels der Dosiereinrichtung 18 wird es ermöglicht, die notwendige Menge des Ausgangsmaterials für den jeweiligen Vorschäumprozess dem Vorschäumbehälter 02 zuzuführen. Die Verbindung zwischen Dosiervorrichtung 18 und der Öffnung 05 am Vorschäumbehälter 02 wird über einen schwenkbaren Einlassstutzen 19 realisiert, wobei dieser zum Füllen in eine Position oberhalb der Öffnung 05 geschwenkt werden kann und im Folgenden zum Schließen der Öffnung 05 des Vorschäumbehälters 02 und zum Schwenken des Vorschäumbehälters 02 gleichfalls zur Seite geschwenkt werden kann.

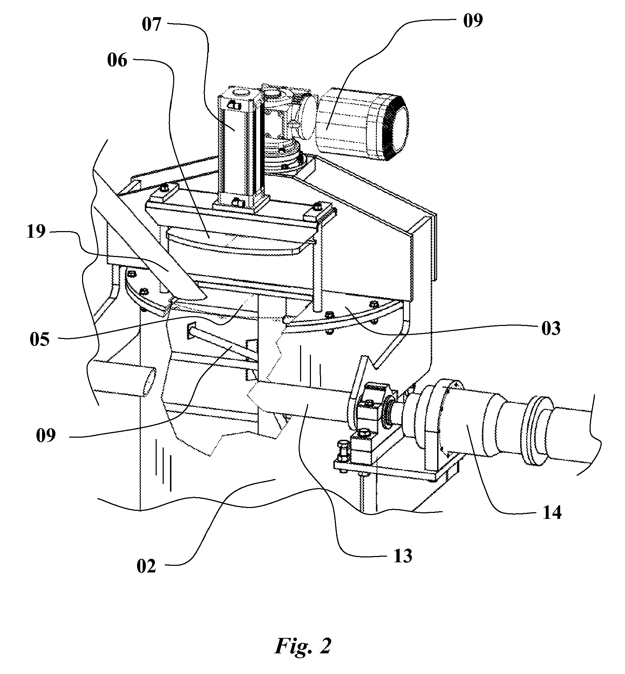

Die **Figur 2** zeigt nochmals eine detaillierte Ansicht der Vorrichtung 01 im Bereich um die Öffnung 05 im Vorschäumbehälter 02 gemäß der Ansicht aus Fig. 1. Ein Ausbruch im Vorschäumbehälter 02 zeigt den Rührer 09, welcher in aller Regel aus einer Mehrzahl von rohrförmigen Armen gebildet wird.

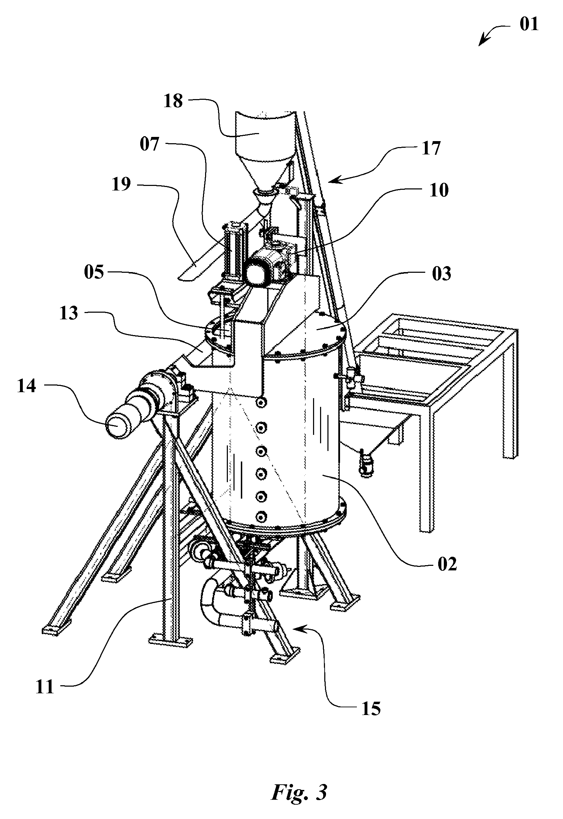

In der **Figur 3** ist gleichfalls die Vorrichtung 01 aus Fig. 1 dargestellt. Diese aus rückseitiger Perspektive dargestellte Vorrichtung 01 zeigt wiederum den Vorschäumbehälter 02 mit allen Anbauteilen und der seitlich zugeordneten Einfüllvorrichtung 17.

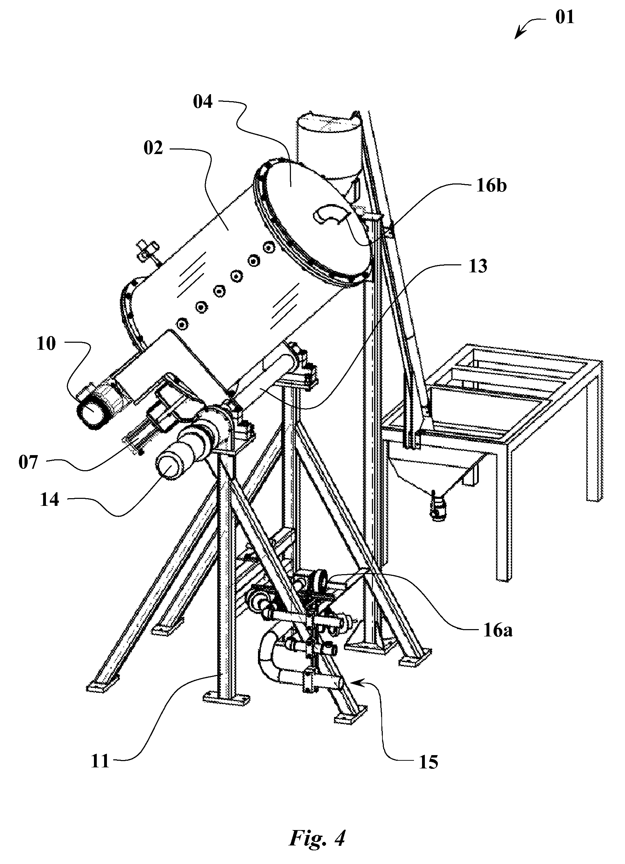

Die **Figur 4** zeigt in gleicher Perspektive wie Fig. 3 ebenso die erfindungsgemäße Vorrichtung 01 aus Fig. 1. Im Unterschied zur vorherigen

Fig. 3 ist hierbei jedoch der Vorschäumbehälter 02 um die Schwenkachse 13 geschwenkt dargestellt. Es wird offensichtlich, dass mit dem Vorschäumbehälter ebenso das Rührwerk 08 mit seinem Antrieb 10 sowie die Schließvorrichtung mit Antrieb 07 geschwenkt wird. Am Boden des Vorschäumbehälters 02 ist die Verbindung zur Heißdampfzuführung 15 mit der behälterseitigen Dampfkupplung 16b dargestellt. Das Gegenstück bildet die gestellseitige Dampfkupplung 16a. Diese steht in Verbindung mit der Dampfzuführung 15. Hierbei stellt ein Ventil im Verlauf zwischen Dampfzuführung 15 und Kupplung 16a sicher, dass bei Schwenken des Vorschäumbehälters 02 kein Heißdampf aus der Kupplung 16a austritt.

## Patentansprüche

1. Vorrichtung zum Vorschäumen von Partikeln aus treibmittelhaltigem Kunststoff mit einem ein Rührwerk aufweisenden Vorschäumbehälter, der eine mit einer Schließvorrichtung verschließbare Öffnung aufweist, die zum Befüllen und zur Entlüftung des Vorschäumbehälters dient,
**dadurch gekennzeichnet,**
**dass** der Vorschäumbehälter derart schwenkbar ist, dass beim Verschwenken die Öffnung aus einer oberen Stellung zum Befüllen des Vorschäumbehälters in eine untere Stellung zum Entleeren des Vorschäumbehälter gelangt, wobei die Öffnung in der unteren Stellung zur Ausgabe des vorgeschäumten Materials dient.

2. Vorrichtung nach Anspruch 1,
**dadurch gekennzeichnet,**
**dass** der Vorschäumbehälter um eine Schwenkachse schwenkbar ist, die im wesentlichen waagerecht angeordnet ist und senkrecht zu einer Mittelachse des Vorschäumbehälters verläuft, wobei insbesondere die Mittelachse zugleich Achse des Rührwerkes ist.

3. Vorrichtung nach Anspruch 2,
**gekennzeichnet durch**
einen steuerbaren Behälterschwenkantrieb, mit dem der Vorschäumbehälter um die Schwenkachse, insbesondere in variabler Geschwindigkeit und in variablen Winkelstellungen, geschwenkt werden kann.

4. Vorrichtung nach einem der Ansprüche 1 bis 3,
**dadurch gekennzeichnet,**
**dass** das Rührwerk mittelbar oder unmittelbar am Vorschäumbehälters derart angeordnet ist, dass beim Schwenken des Vorschäumbehälters das Rührwerk mitgeschwenkt wird.

5. Vorrichtung nach Anspruch 4,
**dadurch gekennzeichnet,**
**dass** das Rührwerk an einem oberen Deckel oder unteren Boden des Vorschäumbehälters angeordnet ist.

6. Vorrichtung nach einem der Ansprüche 1 bis 5,
**dadurch gekennzeichnet,**
**dass** die Schließvorrichtung einen steuerbaren Schließantrieb umfasst, wobei mit der Schließvorrichtung die Öffnung druckdicht verschließbar ist.

7. Vorrichtung nach einem der Ansprüche 1 bis 6,
**dadurch gekennzeichnet,**
**dass** der Druck innerhalb des Vorschäumbehälters mittels der Schließvorrichtung einstellbar ist, wobei die Schließvorrichtung in der Art eines Überdruckventils aufgebaut ist oder der Schließzustand der Schließvorrichtung hinsichtlich Weg und/oder Kraft variabel einstellbar ist.

8. Vorrichtung nach einem der Ansprüche 1 bis 7,
**dadurch gekennzeichnet,**
**dass** der Vorschäumbehälter einen Innenboden, der mit Abstand vom Boden des Vorschäumbehälters in diesem angeordnet ist, und einen Anschluss zur Zufuhr von Heißdampf, der in den zwischen dem Innenboden und dem Boden des Vorschäumbehälters gebildeten Raum mündet, aufweist, wobei der Innenboden dampfdurchlässig ist.

9. Vorrichtung nach Anspruch 8,
**dadurch gekennzeichnet,**
**dass** der Anschluss zur Zufuhr von Heißdampf über eine insbesondere lösbare Kupplung mit einer Einrichtung zur Dampfversorgung verbindbar ist.

10. Vorrichtung nach Anspruch 8 oder 9,
**dadurch gekennzeichnet,**
**dass** der Heißdampf zumindest bis zu einer geringen Schrägstellung des Vorschäumbehälters von 30° aus der Senkrechten dem Vorschäumbehälter zugeführt werden kann.

11. Vorrichtung nach einem der Ansprüche 1 bis 10,
**dadurch gekennzeichnet,**
**dass** die Vorrichtung eine Einfüllvorrichtung für das aufzuschäumende Ausgangsmaterial aufweist, wobei die Einfüllvorrichtung mit einem Dosierbehälter und einem vom Dosierbehälter zum Vorschäumbehälter führenden Einfüllstutzen versehen ist, der relativ zur Öffnung bewegbar, insbesondere schwenkbar, ist.

12. Vorrichtung nach einem der Ansprüche 1 bis 11,
**gekennzeichnet durch**
eine im Wesentlichen unterhalb des Aufschäumbehälters angeordnete Auffangvorrichtung, insbesondere ein Fließbett, für das aufgeschäumte und aus dem Vorschäumbehälter ausgegebene Material.

13. Vorrichtung nach einem der Ansprüche 1 bis 12,
**gekennzeichnet durch**
eine Steuerungseinrichtung, wobei mittels der Steuerungseinrichtung das Öffnen und Schließen der Öffnung, das Schwenken des Einfüllstutzens, das Einfüllen des Ausgangsmaterials, das Rührwerk und/oder das Schwenken des Vorschäumbehälters steuer- oder regelbar ist.
